# EUROPÄISCHE PATENTANMELDUNG

(11) **EP 2 708 765 A2**
(43) Veröffentlichungstag der Anmeldung: **19.03.2014**
(21) Anmeldenummer: 13181469.1
(22) Anmeldetag: 23.08.2013
(51) Int. Cl.: F16C 27/04

(54) **Lageranordnung, Ventilator, Verfahren zum Führen einer Welle und Programm**

(30) Priorität: 12.09.2012 DE 102012216209
(71) Anmelder: Aktiebolaget SKF, 41550 Göteborg (SE)
(72) Erfinder: Kern, Henning, 97422 Schweinfurt (DE); Lorenscheit, Jochen, 97222 Rimpar (DE); Niedermeyer, Horst, 97509 Lindach (DE); Topaloglu, Ilim, 97421 Schweinfurt (DE)
(74) Vertreter: Schonecke, Mitja

(57) **Zusammenfassung**

Eine Lageranordnung (120) gemäß einem Ausführungsbeispiel umfasst ein Lager (130), das ausgebildet ist, um eine Welle (110) wenigstens radial zu führen, eine Aufnahme (150) für das Lager (130), die so ausgebildet ist, dass zwischen dem Lager (130) und der Aufnahme (120) ein ringförmiger, das Lager (130) umgebender Spalt (160) gebildet wird, sodass das Lager (130) eine Bewegung senkrecht zu einer Achse (140) des Lagers (130) ausführen kann, wobei der Spalt (160) eine magnetorheologische Flüssigkeit umfasst, und eine Magnetfeldquelle (180), die ausgebildet ist, um die magnetorheologische Flüssigkeit einem Magnetfeld auszusetzen. Hierdurch kann ggf. eine Betriebssicherheit einer eine Lageranordnung (120) umfassende Anlage, Maschine oder Baugruppe erhöht werden.

## Beschreibung

Ausführungsbeispiele beziehen sich auf eine Lageranordnung, beispielsweise für einen Ventilator, ein Verfahren zum Führen einer Welle und ein Computerprogramm mit einem Programmcode zum Durchführen eines solchen Verfahrens.

In vielen Bereichen des Maschinen-, Anlagen- und Fahrzeugbaus tritt die Herausforderung auf, dass eine Welle geführt werden muss, welche sich bezüglich einer weiteren Komponente dreht oder zumindest drehen kann. Bei vielen dieser Anwendungen tritt die zusätzliche Herausforderung auf, dass aufgrund von ggf. veränderlichen Unwuchten oder anderen parasitären Einflüssen die Welle bei einer Rotation um ihre Drehachse Kräfte und Momente erfährt, die zu einer Bewegung der Welle senkrecht zu der Drehachse des Lagers führen können. Hierbei stimmt die Drehachse der Welle in einem Gleichgewichtszustand im Allgemeinen mit einer Achse eines zur Lagerung der Welle herangezogenen Lagers überein.

Ein Beispiel hierfür stellen fliegend gelagerte hochtourige Ventilatoren dar, bei denen die Gefahr besteht, dass die Betriebsdrehzahl in der Nähe von bzw. innerhalb der Resonanzdrehzahl einer solchen senkrechten Bewegung zu der Drehachse liegen kann. Dies kann zu erheblichen Schwingungsproblemen führen.

Die kritische Drehzahl kann konventionell durch Erhöhung der Steifigkeit nach oben verschoben werden, um einen ausreichend großen Abstand zu einer Betriebsdrehzahl des betreffenden Ventilators zu erzielen. Eine hohe Gesamtsteifigkeit wird bei einer konventionellen Lagerung durch große Wellenquerschnitte und große Lager realisiert, was sich jedoch ggf. nachteilig auf andere Aspekte auswirken kann.

Die DE 38 42 230 C1 beschreibt einen Ventilator mit einem fliegend gelagerten Laufrad, wobei die Welle mit zwei im Abstand voneinander liegenden Wälzlagern in einem Lagerstuhl gelagert ist. Das laufradseitige Wälzlager ist außen in einer Buchse gelagert, die im Lagerstuhl mit radialem Spiel angeordnet ist, und der durch das Spiel gebildete Spalt ist an seinen axialen Enden abgedichtet und mit einer externen Ölzufuhr versehen, mit der der Spalt während des Betriebs mit Öl gefüllt gehalten werden kann. Eine an der Buchse angreifende Federanordnung ist vorgesehen, mit der die Buchse entgegen der statischen Lagerlast zentrierbar ist. Das kupplungsseitige Lager ist konventionell mit einem Kugellager als Festlager ausgeführt.

Eine solche Anordnung kann sowohl oberhalb wie auch unterhalb einer kritischen Drehzahl betrieben werden, wobei die in dem betreffenden Resonanzpunkt auftretenden dynamischen Amplitudenüberhöhungen durch den ölgefüllten Spalt gedämpft werden. Unabhängig hiervon handelt es sich jedoch bei dieser Konstruktion um eine, bei der der Resonanzbereich je nach konkreter Auslegung sich über einen vergleichsweise großen Drehzahlbereich erstrecken kann, in dem entsprechende Resonanzeffekte auftreten können. Bei dem Durchfahren dieses Resonanzbereichs können so der Ventilator und seine Welle in Mitleidenschaft gezogen werden. Hierdurch kann so die Betriebssicherheit des Ventilators ggf. nachteilig beeinflusst werden.

Aber auch in anderen Bereichen des Anlagen-, Maschinen- und Fahrzeugbaus treten ähnliche Herausforderungen auf.

Es besteht daher ein Bedarf, eine Lageranordnung und ein entsprechendes Verfahren zu schaffen, welche eine Betriebssicherheit einer entsprechenden Anlage, Maschine oder Baugruppe erhöhen.

Diesem Bedarf tragen eine Lageranordnung gemäß Patentanspruch 1, ein Ventilator gemäß Patentanspruch 6, ein Verfahren zum Führen einer Welle gemäß Patentanspruch 7 und ein Computerprogramm gemäß Patentanspruch 8 Rechnung.

Eine Lageranordnung gemäß einem Ausführungsbeispiel, die beispielsweise für einen Ventilator bestimmt sein kann, umfasst ein Lager, das ausgebildet ist, um eine Welle wenigstens radial zu führen, eine Aufnahme für das Lager, die so ausgebildet ist, dass zwischen dem Lager und der Aufnahme ein ringförmiger, das Lager umgebender Spalt gebildet wird, sodass das Lager eine Bewegung senkrecht zu einer Achse des Lagers führen kann, wobei der Spalt eine magnetorheologische Flüssigkeit umfasst, und eine Magnetfeldquelle, die ausgebildet ist, um die magnetorheologische Flüssigkeit einem Magnetfeld auszusetzen.

Hierbei weist das Lager häufig einen ersten und einen zweiten Lagerring auf, die zueinander drehbar sind, wobei die Achse des Lagers die Rotationsachse der betreffenden Relativbewegung der beiden Lagerringe zueinander darstellen kann. Das Lager kann hierbei ein Wälzlager oder auch ein Gleitlager darstellen.

Einem Lageranordnung gemäß einem Ausführungsbeispiel liegt so die Erkenntnis zugrunde, dass eine Betriebssicherheit einer solchen Lageranordnung, aber auch einer entsprechenden Anlage, Maschine oder Baugruppe, dadurch verbessert werden kann, indem durch das Vorsehen der magnetorheologischen Flüssigkeit in dem Spalt eine gezielte Beeinflussung der Viskosität vorgenommen werden kann, wodurch das Resonanzverhalten der Lageranordnung hinsichtlich der Bewegung senkrecht zu der Achse des Lagers beeinflusst werden kann.

Optional kann bei einer Lageranordnung gemäß einem Ausführungsbeispiel ferner wenigstens ein Dichtelement vorgesehen sein, bei dem es sich beispielsweise um wenigstens einen O-Ring handelt, wobei das wenigstens eine Dichtelement ausgebildet ist, um den Spalt abzudichten und eine Federwirkung senkrecht zu der Achse des Lagers auf das Lager auszuüben. Optional kann darüber hinaus das wenigstens eine Dichtelement gerade so ausgestaltet sein, dass dies ausschließlich die entsprechende Federwirkung bereitstellt. Hierdurch kann es möglich sein, dass mithilfe des Dichtelements sowohl eine Abdichtung des Spalts entlang der Achse des Lagers, wie auch die vorbeschriebene Federwirkung senkrecht zu der Achse des Lagers vorgesehen wird. Hierdurch kann also ggf. eine Implementierung eines zusätzlichen Federelements aufgrund des Vorsehens der Dichtelemente eingespart werden. Auch hierdurch kann somit die Betriebssicherheit erhöht werden, indem mithilfe konstruktiv einfacherer Mittel ggf. Komponenten eingespart werden können, da diese aufgrund ihres Fehlens nicht von einem Defekt betroffen sein können.

Optional kann bei einer Lageranordnung gemäß einem Ausführungsbeispiel die Lageranordnung so ausgelegt sein, dass bei einer nominellen Drehzahl die Lageranordnung in einem überkritischen Betriebszustand betreibbar ist. Anders ausgedrückt kann die nominelle Drehzahl der Lageranordnung über einer kritischen Drehzahl liegen, die die Resonanzfrequenz der Lageranordnung darstellt. Je nach konkreter Ausgestaltung kann hierbei die entsprechende Auslegung ausschließlich aufgrund der zuvor beschriebenen Federwirkung des wenigstens einen Dichtelements erfolgen.

Optional kann bei einer Lageranordnung gemäß einem Ausführungsbeispiel die Magnetfeldquelle ausgebildet sein, um die magnetorheologische Flüssigkeit dem Magnetfeld mit einer einstellbaren oder regelbaren Stärke auszusetzen. Hierdurch kann es möglich sein, die Viskosität der magnetorheologischen Flüssigkeit in dem Spalt durch Ansteuern der Magnetfeldquelle so zu beeinflussen, dass die Eigenfrequenz der Lageranordnung variierbar ist. Optional kann so bei einer Lageranordnung gemäß einem Ausführungsbeispiel die Magnetfeldquelle eine Spule, eine Leiterschleife oder eine andere Leiterbahn umfassen, mit deren Hilfe das Magnetfeld entsprechend einstellbar ist.

Optional kann eine solche Lageranordnung gemäß einem Ausführungsbeispiel ferner ein Steuergerät umfassen, das ausgebildet ist, um die Magnetfeldquelle derart anzusteuern, dass die magnetorheologische Flüssigkeit bei Annäherung an eine kritische Drehzahl der Lageranordnung einem Magnetfeld einer solchen Stärke ausgesetzt wird, dass durch das Ändern der Stärke des Magnetfelds die Lageranordnung von einem überkritischen zu einem unterkritischen Betriebszustand oder von einem unterkritischen zu einem überkritischen Betriebszustand wechselt. Hierdurch kann es möglich sein, eine Verweildauer des Lagers im Bereich des kritischen Betriebszustands, also beispielsweise im Bereich eines kritischen Drehzahlbands zu begrenzen, indem das Steuergerät gezielt durch Veränderung der Stärke des Magnetfelds die Lageranordnung von einem überkritischen zu einem unterkritischen Betriebszustand oder umgekehrt bringt. Hierdurch kann somit die Betriebssicherheit einer Lageranordnung gemäß einem Ausführungsbeispiel dadurch verbessert werden, indem der Wechsel zwischen den betreffenden Betriebszuständen über den kritischen Bereich hinweg durch Ansteuerung der Magnetfeldquelle beschleunigt werden kann.

Optional kann bei einer solchen Lageranordnung gemäß einem Ausführungsbeispiel diese auch so ausgebildet sein, dass durch das Ändern der Stärke des Magnetfelds alleine der Wechsel der Betriebszustände erzielbar ist. Anders ausgedrückt kann die Lageranordnung, die Magnetfeldquelle und/oder das Lager ggf. sogar so ausgestaltet sein, dass ohne eine Änderung der Drehzahl der Welle der Wechsel der Betriebszustände über den kritischen Betriebszustand hinweg erzielbar ist.

Optional kann eine Lageranordnung gemäß einem Ausführungsbeispiel ferner wenigstens ein Sensor zum wenigstens teilweise Erfassen eines momentanen Betriebszustands der Lageranordnung umfassen, der mit dem Steuergerät gekoppelt ist, wobei das Steuergerät ausgebildet ist, um wenigstens teilweise auf Basis des von dem Sensor erfassten momentanen Betriebszustands die Magnetfeldquelle anzusteuern, um den Betriebszustand der Lageranordnung zu wechseln. Hierdurch kann es ggf. möglich sein, eine genauere Reaktion auf das Verhalten der Lageranordnung beim Wechsel der Betriebszustände zu berücksichtigen und so wiederum die Betriebssicherheit der Lageranordnung zu verbessern.

Optional kann bei einer Lageranordnung gemäß einem Ausführungsbeispiel das Steuergerät ausgebildet sein, um auf Basis einer geschlossenen Regelschleife die Magnetfeldquelle anzusteuern, um den Wechsel des Betriebszustands zu bewirken. Eine solche Regelung kann beispielsweise ein Erfassen einer Amplitude oder anderer schwingungsrelevanter Informationen hinsichtlich einer Bewegung der Welle bzw. des entsprechenden Lagers senkrecht zu der Achse des Lagers umfassen. Alternativ hierzu kann das Steuergerät auch so ausgebildet sein, um auf Basis einer Ansteuerung, beispielsweise auf Basis einer Drehzahl der Welle, die Magnetfeldquelle entsprechend anzusteuern, um den Wechsel des Betriebszustands zu bewirken. Eine solche Implementierung kann ebenso wie der Betrieb einer geschlossenen Regelschleife eine Betriebssicherheit der Lageranordnung verbessern, jedoch einfacher und damit kostengünstiger zu implementieren sein.

Optional kann bei einer Lageranordnung gemäß einem Ausführungsbeispiel die Magnetfeldquelle einen Permanentmagneten und/oder einen Quasipermanentmagneten umfassen. Hierdurch kann es möglich sein, die Betriebssicherheit der Lageranordnung schon dadurch zu verbessern, indem hierdurch auch im Falle eines Ausfalls einer ggf. elektrisch betriebenen Magnetfeldquelle und/oder eines Ausfalls des Steuergeräts die Viskosität der magnetorheologischen Flüssigkeit durch den Permanentmagneten bzw. den Quasipermanentmagneten bestimmt wird. Ein Quasipermanentmagnet ist hierbei ein solcher, welcher eine hohe Remanenz aufweist. Ein solcher kann beispielsweise im Falle einer supraleitenden Implementierung mithilfe eines entsprechenden supraleitenden Magneten realisiert werden. Trotz des Wortbestandteils "Richtung" kann es sich bei den einzelnen "Richtungen" im vorliegenden Fall nicht notwendigerweise um eine Richtung im mathematischen Sinne eines Vektors, sondern um eine Linie handeln, entlang derer die entsprechende Bewegung erfolgt. Eine solche Linie kann geradlinig, jedoch auch gebogen sein. Abzugrenzen sind hier Richtungen, die tatsächlich Richtungen entlang einer Linie, beispielsweise der Bewegungsrichtung, beschreiben. So kann beispielsweise eine erste Richtung einer zweiten Richtung entgegengerichtet sein, beide jedoch entlang einer auch als Richtung bezeichneten Linie verlaufen oder gerichtet sein.

Eine Komponente kann beispielsweise eine n-zählige Rotationssymmetrie aufweisen, wobei n eine natürliche Zahl größer oder gleich 2 ist. Eine n-zählige Rotationssymmetrie liegt dann vor, wenn die betreffende Komponente beispielsweise um eine Rotations- oder Symmetrieachse um (360°/n) drehbar ist und dabei im Wesentlichen formenmäßig in sich selbst übergeht, also bei einer entsprechenden Drehung im Wesentlichen auf sich selbst im mathematischen Sinn abgebildet wird. Im Unterschied hierzu geht bei einer vollständigen rotationssymmetrischen Ausgestaltung einer Komponente bei einer beliebigen Drehung um jeden beliebigen Winkel um die Rotations- oder Symmetrieachse die Komponente formenmäßig im Wesentlichen in sich selbst über, wird also im mathematischen Sinn im Wesentlichen auf sich selbst abgebildet. Sowohl eine n-zählige Rotationssymmetrie wie auch eine vollständige Rotationssymmetrie wird hierbei als Rotationssymmetrie bezeichnet.

Eine kraftschlüssige oder reibschlüssige Verbindung kommt durch Haftreibung, eine stoff schlüssige Verbindung durch molekulare oder atomare Wechselwirkungen und Kräfte und eine formschlüssige Verbindung durch eine geometrische Verbindung der betreffenden Verbindungspartner zustande. Die Haftreibung setzt somit im Allgemeinen eine Normalkraftkomponente zwischen den beiden Verbindungspartnern voraus.

Benachbart sind zwei Objekte, zwischen denen kein weiteres Objekt desselben Typs angeordnet ist. Unmittelbar benachbart sind entsprechende Objekte, wenn sie aneinandergrenzen, also beispielsweise miteinander in Kontakt stehen. Unter einer einstückig ausgebildeten Komponente wird eine solche verstanden, die genau aus einem zusammenhängenden Materialstück gefertigt ist. Der Begriff "einstückig" kann daher synonym mit den Begriffen "integral" oder "einteilig" verwendet werden.

Eine mechanische Kopplung zweier Komponenten umfasst sowohl eine unmittelbare, wie auch eine mittelbare Kopplung. Elektrische oder andere Komponenten sind miteinander mittelbar über eine weitere Komponente oder unmittelbar miteinander derart gekoppelt, dass diese einen informationstragenden Signalaustausch zwischen den betreffenden Komponenten ermöglichen. So kann die entsprechende Kopplung abschnittsweise oder vollständig beispielsweise elektrisch, optisch, magnetisch oder mittels Funktechnik implementiert und umgesetzt sein. Die Signale können hierbei hinsichtlich ihres Wertebereichs sowie ihres zeitlichen Verlaufs kontinuierlich, diskret oder, beispielsweise abschnittsweise, beide Arten umfassen. Es kann sich so beispielsweise um analoge oder digitale Signale handeln. Ein Signalaustausch kann darüber hinaus auch über ein Schreiben bzw. Lesen von Daten in Register oder andere Speicherstellen erfolgen.

Ein Ausführungsbeispiel umfasst ferner einen Ventilator mit einem Laufrad, das fliegend an einer Welle angeordnet ist, wobei die Welle durch eine Lageranordnung gemäß einem Ausführungsbeispiel geführt ist.

Ebenso umfasst ein Ausführungsbeispiel ein Verfahren zum Führen einer Welle, beispielsweise eines Ventilators, wenigstens mittels einer Lageranordnung, die ein Lager, das ausgebildet ist, um eine Welle wenigstens radial zu führen, und eine Aufnahme für das Lager umfasst, die so ausgebildet ist, dass zwischen dem Lager und der Aufnahme ein ringförmiger das Lager umgebender Spalt gebildet wird, sodass das Lager eine Bewegung senkrecht zu einer Achse des Lagers ausführen kann, wobei der Spalt eine magnetorheologische Flüssigkeit umfasst, wobei die Lageranordnung so ausgebildet ist, dass bei einer nominellen Drehzahl die Lageranordnung in einem überkritischen Betriebszustand betreibbar ist. Das Verfahren umfasst hierbei ein Erfassen eines Betriebszustands der Lageranordnung und ein Ändern einer Stärke eines Magnetfelds, dem die magnetorheologische Flüssigkeit ausgesetzt ist, sodass die magnetorheologische Flüssigkeit bei Annäherung an eine kritische Drehzahl der Lageranordnung einem Magnetfeld einer solchen Stärke ausgesetzt wird, dass durch das Ändern der Stärke des Magnetfelds die Lageranordnung von einem überkritischen zu einem unterkritischen Betriebszustand oder von einem unterkritischen zu einem überkritischen Betriebszustand wechselt. Hierbei wird unter einem Ändern der Stärke des Magnetfelds auch ein erstmaliges schaffen bzw. Einschalten eines solchen Magnetfeldes verstanden, da bei einem solchen beispielsweise das Magnetfeld von einer Stärke null bzw. einer Stärke, die dem Erdmagnetfeld entspricht, verändert wird. Gleiches gilt ebenso für ein Abschalten oder Ausschalten des Magnetfeldes.

Ein Ausführungsbeispiel umfasst ferner ein Computerprogramm mit einem Programmcode zum Durchführen eines Verfahrens gemäß einem Ausführungsbeispiel, wenn das Programm auf einer programmierbaren Hardwarekomponente abläuft. Hierbei kann eine entsprechende Hardwarekomponente beispielsweise auch von einem Steuergerät oder einer Komponente eines solchen Steuergeräts gebildet werden, wobei die entsprechende Software beispielsweise auch als Firmware implementiert sein kann. Das Erfassen eines Betriebszustands kann hierbei beispielsweise ein Auslesen einer Speicherstelle, beispielsweise eines Registers, umfassen, während das Ändern der Stärke des Magnetfelds beispielsweise durch ein Einschreiben eines Wertes in eine Speicherstelle, beispielsweise ein Register, durchgeführt werden kann. Selbstverständlich können die betreffenden Schritte auch durch ein Empfangen bzw. Senden eines anderen informationstragenden Signals, beispielsweise eines elektrischen, optischen, magnetischen oder funktechnischen Signals umgesetzt und implementiert sein. Die Signale können hierbei sowohl hinsichtlich ihrer zeitlichen Auflösung wie auch hinsichtlich ihrer Werte kontinuierlich, diskret oder eine Kombination beider umfassen. Entsprechende Signale umfassen so beispielsweise analoge Signale, jedoch auch digitale Signale.

Bei einem Ausführungsbeispiel eines Verfahrens können die zuvor genannten Verfahrensschritte in der angegebenen, jedoch auch gegebenenfalls in einer abweichenden Reihenfolge durchgeführt werden. So können gegebenenfalls einzelne Verfahrensschritte simultan, zumindest jedoch auch zeitlich überlappend erfolgen, sofern sich aus deren Beschreibung oder dem technischen Zusammenhang nichts anderes ergibt.

Nachfolgend werden unter Bezugnahme auf die beigefügten Figuren Ausführungsbeispiele näher beschrieben und erläutert.
- Fig. 1: zeigt eine Querschnittsdarstellung durch eine Lageranordnung gemäß einem Ausführungsbeispiel eines Ventilators gemäß einem Ausführungsbeispiel;
- Fig. 2: zeigt eine vergrößerte Darstellung der Lageranordnung aus Fig. 1;
- Fig. 3: zeigt ein Flussdiagramm eines Verfahrens zum Führen einer Welle gemäß einem Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Wie eingangs bereits erläutert wurde, tritt bei vielen Anlagen, Maschinen und Baugruppen des Maschinen-, Anlagen- und Fahrzeugbaus das Problem auf, dass eine Welle bezüglich einer anderen Komponente drehbar gelagert und geführt werden muss. Je nach konkreter Implementierung kann es hierbei vorkommen, dass aufgrund von Unwuchten oder anderen parasitären Effekten eine Belastung der Lagerung senkrecht zu einer Drehachse der Lagerung auftreten kann. Ein Beispiel stellen hierbei fliegend gelagerte hochtourige Ventilatoren dar, auf die jedoch Ausführungsbeispiele bei Weitem nicht beschränkt sind. Auch wenn also im Folgenden im Wesentlichen entsprechende Ventilatoren beschrieben werden, handelt es sich hierbei ohne Beschränkung der Allgemeinheit lediglich um ein mögliches Anwendungsgebiet bzw. ein entsprechendes Ausführungsbeispiel.

Bei fliegend gelagerten hochtourigen Ventilatoren besteht die Gefahr, dass die Betriebsdrehzahl in der Nähe bzw. innerhalb der Resonanzdrehzahl liegt. Dies kann zu erheblichen Schwingungsproblemen führen. Die kritische Drehzahl kann hierbei zwar konventionell durch eine Erhöhung der Steifigkeit nach oben verschoben werden, um einen ausreichend großen Abstand zur Betriebsdrehzahl zu erzielen, eine solch hohe Gesamtsteifigkeit wird jedoch bei einer konventionellen Lagerung durch große Wellenquerschnitte und große Lager realisiert, was wiederum zu anderen Problemen führen kann. Für einen störungsfreien Betrieb kann es bei einer konventionellen Lagerung ggf. notwendig sein, dass auf das Lager eine bestimmte Mindestbelastung wirkt. Bei einer unzureichenden spezifischen Lagerbelastung können ansonsten Gleitbewegungen zwischen Wälzkörpern und den betreffenden Laufbahnen entstehen und somit Oberflächenschäden hervorgerufen werden. Dies kann zu einem frühzeitigen Ausfall der betreffenden Lager führen.

Darüber hinaus kann es ggf. auch passieren, dass trotz überdimensioniertem Design die Betriebsdrehzahl nicht weit genug von der ersten kritischen Drehzahl entfernt ist. So kann es passieren, dass die Gesamtsteifigkeit nicht weiter erhöht werden kann, da die Grenzen der Lagersteifigkeit erreicht sind, die beispielsweise durch die Drehzahlgrenze der Lager gegeben sein kann. Ebenso können enge Toleranzen, beispielsweise hinsichtlich Passungen und Lagerluft, erforderlich sein, um in der Praxis die errechneten Steifigkeitswerte einzuhalten. Bei einer Revision können dann beispielsweise durch den Einbau eines Lagers mit höherer Lagerluft Schwingungsprobleme auftreten, da nun die kritische Drehzahl tiefer liegt als berechnet.

Ebenso können Anbackungen am Lüfterrad einer zeitlichen Veränderung unterworfen sein, sodass Unwuchtkräfte und somit die Gesamtsteifigkeit des Systems beeinflusst werden. Auch die Aufstellungssituation kann unmittelbar oder mittelbar Einfluss auf die Steifigkeitswerte nehmen. Werden die bei der Konzeptionierung zugrunde gelegten oder angenommenen Werte bei der Baustellenmontage nicht realisiert, können ebenso Schwingungsprobleme entstehen. Darüber hinaus können ggf. auch höhere Betriebstemperaturen aufgrund der überdimensionierten Auslegung auftreten.

Konventionell werden neben überdimensionierten Auslegungen auch solche mit einem sogenannten überkritischen Rotorkonzept eingesetzt. So werden hochtourig laufende Ventilatoren mit überkritischem Rotorkonzept mit Gleit- bzw. Wälzlagern realisiert. Die Gleit- bzw. Wälzlagerung wird in einem solchen Fall mit einer zusätzlichen äußeren Dämpfung, beispielsweise einer Quetschöldämpflagerung, ausgeführt, sodass bei der Resonanzdurchfahrt nur geringe dynamische Überhöhungen auftreten.

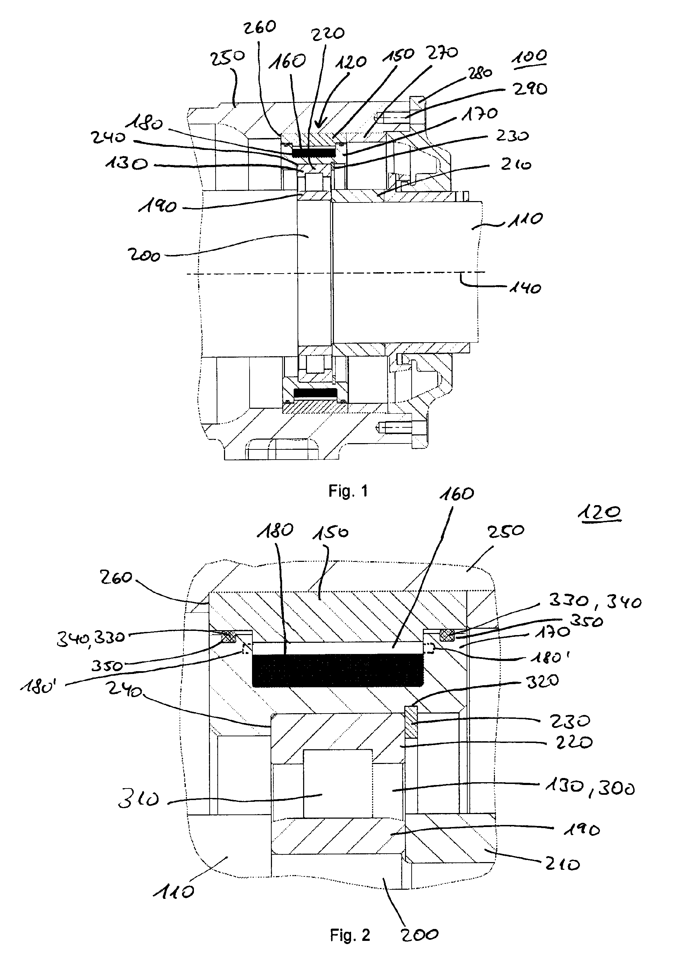

Fig. 1 zeigt eine Querschnittsdarstellung durch einen Ventilator 100 gemäß einem Ausführungsbeispiel, bei dem jedoch ein fliegend mit einer Welle 110 gelagertes Laufrad nicht gezeigt ist. Der Ventilator 100 umfasst eine Lageranordnung 120 gemäß einem Ausführungsbeispiel, die bei dem in Fig. 1 gezeigten Ausführungsbeispiel ihrerseits ein Lager 130 umfasst, das ausgebildet ist, um die Welle 110 wenigstens radial, also senkrecht zu einer Achse 140 des Lagers 130, die mit der Rotationsachse der Welle 110 zusammenfällt, zu führen.

Die Lageranordnung 120 umfasst ferner eine Aufnahme 150 für das Lager 130, die ausgebildet ist, sodass zwischen dem Lager 130 und der Aufnahme ein ringförmiger, das Lager 130 umgebender Spalt 160 gebildet wird. Durch den Spalt 160 kann das Lager 130 eine Bewegung senkrecht zu der Achse 140 des Lagers 130 ausführen. Der Spalt 160 ist hierbei mit einer magnetorheologischen Flüssigkeit befüllt bzw. umfasst eine solche Flüssigkeit. Als magnetorheologische Flüssigkeiten (MRF) werden hierbei solche Flüssigkeiten bezeichnet, bei denen durch ein Anlegen eines Magnetfelds eine Viskosität der betreffenden Flüssigkeit verändert werden kann. Magnetorheologische Flüssigkeiten können so beispielsweise als Suspension von magnetisch polarisierbaren Partikeln in einer entsprechenden Trägerflüssigkeit implementiert werden, wenn diese beispielsweise hinreichend fein verteilt sind.

Bei dem in Fig. 1 gezeigten Ausführungsbeispiel umfasst die Lageranordnung 120 ferner eine Buchse 170 sowie eine Magnetfeldquelle 180, die entlang der radialen Richtung zwischen dem Lager 130 und der Aufnahme 150 angeordnet sind. Der genaue Aufbau der Lageranordnung wird jedoch im Zusammenhang mit der in Fig. 2 vergrößert dargestellten Querschnittsansicht noch näher illustriert und erläutert.

Das Lager 130 ist hierbei mit einem Innenring 190 auf einem Wellenansatz 200 mechanisch verbunden. Hierbei kann beispielsweise eine kraftschlüssige Verbindungstechnik, beispielsweise eine Presspassung zum Einsatz kommen. Über eine Muffe 210 wird der Innenring 190 des Lagers 130 auf der Welle 110 fixiert.

Das Lager 130 umfasst ferner einen Außenring 220, der über einen Sicherungsring 230 und einem Vorsprung 240 in der Buchse axial fixiert ist. Der Außenring 220 ist hierbei ebenfalls mechanisch, beispielsweise über eine kraftschlüssige Verbindung, also beispielsweise eine Presspassung, mit der Buchse 170 verbunden.

Die Aufnahme 150 ist ihrerseits in einem Gehäuse 250 des Ventilators über einen Absatz 260 einerseits und Distanzstück 270 sowie einen Gehäusedeckel 280 in dem Gehäuse 250 in axialer Richtung fixiert. Der Gehäusedeckel 280 ist hierbei über eine Verschraubung 290 mit dem Gehäuse 250 verbunden.

Fig. 2 zeigt eine vergrößerte Darstellung der Lageranordnung 120 auf Fig. 1. So zeigt Fig. 2 beispielsweise, dass es sich bei dem Lager 130 genauer gesagt um ein Zylinderrollenlager 300 handelt, welches eine Mehrzahl von zylinderförmigen Wälzkörpern 310 umfasst. Diese laufen auf entsprechenden Laufbahnen an dem Innenring 190 und dem Außenring 220 ab und ermöglichen so die bekannte Führung und Drehbarkeit des Innenrings 190 relativ zu dem Außenring 220 bezüglich der in Fig. 2 nicht gezeigten Achse 140 des Lagers 130. Das Zylinderrollenlager 300 ermöglicht hierbei im Wesentlichen eine Führung entlang der radialen Richtung, also senkrecht zu der in Fig. 2 nicht gezeigten Achse 140.

Selbstverständlich können bei anderen Ausführungsbeispielen einer Lageranordnung 120 bzw. eines Ventilators 100 auch andere als Zylinderrollenlager zum Einsatz kommen. So können beispielsweise auch Kugellager, Nadellager, Kegelrollenlager, Tonnenlager sowie andere Wälzlager, jedoch auch Gleitlager im Rahmen von Ausführungsbeispielen zum Einsatz kommen.

Fig. 2 zeigt darüber hinaus, dass der Sicherungsring 230 in einer entsprechenden Nut 320 der Buchse 170 angeordnet ist. Über den in der Nut 320 eingesetzten Sicherungsring 230 und den Vorsprung 240 wird so der Außenring 220 des Lagers 130 in seiner axialen Position fixiert.

Der Außenring 220 weist hierbei Borde zum Führen der zylinderförmigen Wälzkörper 310 auf, während der Innenring 190 bordfrei ausgeführt ist. Das Zylinderrollenlager 300 ermöglicht so einen Ausgleich einer axialen Verschiebung der Welle 110. So kann das Lager 130 beispielsweise als Loslager als Teil einer Fest-Los-Lagerung eingesetzt werden. Selbstverständlich kann bei einem Ausführungsbeispiel nicht nur ein Loslager oder ein Festlager einer Fest-Los-Lagerung sein, es können auch Lager einer schwimmenden Lagerung sowie andere Lagerkombinationen zum Einsatz kommen.

Fig. 2 zeigt darüber hinaus, dass die Lageranordnung 120 im vorliegenden Fall zwei Dichtelemente 330 umfasst, die als O-Ringe 340 implementiert sind. Die Dichtelemente 330 sind hierbei in entsprechende Nute 350 der Buchse 170 eingebracht und dichten den Spalt 160 gegen ein Austreten der in den Spalt eingebrachten magnetorheologischen Flüssigkeit ab. Die beiden Dichtelemente 330 sind also entlang der in Fig. 2 nicht eingezeichneten Achse 140 beabstandet angeordnet. Aufgrund ihrer Elastizität ermöglichen sie darüber hinaus auch das Schaffen einer Federwirkung senkrecht zu der Achse 140 des Lagers 130, sodass die Dichtelemente 330 eine Kraft in radialer Richtung auf das Lager 130 ausüben können, welche im vorliegenden Ausführungsbeispiel durch die Buchse 170 vermittelt wird. So kann beispielsweise durch eine entsprechende Auslegung der Dichtelemente 330 die Lageranordnung 120 gerade so ausgelegt sein, dass diese bei einer nominellen Drehzahl der Lageranordnung 120 in einem überkritischen Betriebszustand, also mit einer Drehzahl betrieben wird, die oberhalb der Resonanzfrequenz bezüglich einer Schwingung senkrecht zu der Achse 140 des Lagers 130 liegt.

An dieser Stelle bietet es sich an, darauf hinzuweisen, dass anstelle zweier getrennter Komponenten in Form der Buchse 170 und des Außenrings 220 des Lagers 130 diese beispielsweise auch als eine gemeinsame Komponente, also beispielsweise als ein besonders ausgestalteter Außenring 220 implementiert sein können. In einem solchen Fall kann der Außenring 220 beispielsweise die entsprechenden Aufnahmen für die Dichtelemente 330 umfassen. Die Buchse 170 stellt daher nur ein Beispiel einer optionalen Komponente dar. Auch können bei anderen Ausführungsbeispielen Außenring 220 und Innenring 190 hinsichtlich ihrer Rollen bezüglich des Spalts 10 und seiner Anordnung vertauscht sein.

Bei dem hier gezeigten Ausführungsbeispiel weist, wie bereits zuvor im Zusammenhang mit Fig. 1 erwähnt wurde, die Lageranordnung 120 im Bereich des Spalts 160 die magnetorheologische Flüssigkeit auf, die sich hinsichtlich ihrer Viskosität durch das Anlegen eines entsprechenden Magnetfeldes verändern lässt. Um dies technisch auszunutzen, weist die Lageranordnung 120 die Magnetfeldquelle 180 auf, bei der es sich beispielsweise um eine Spule handeln kann, die ein entsprechendes Magnetfeld erzeugt, welches auf die magnetorheologische Flüssigkeit in dem Spalt 160 einwirkt. Durch den Einsatz einer solchen Spule, jedoch auch durch den Einsatz entsprechender Leiterschleifen oder anderer elektrischer Leiter kann so die Stärke des Magnetfelds einstellbar oder regelbar sein.

Optional kann eine entsprechende Lageranordnung 100 bzw. ein Ventilator 100 ferner ein Steuergerät umfassen, welches in Fig. 2 nicht gezeigt ist. Das Steuergerät kann in einem solchen Fall ausgebildet sein, um die Magnetfeldquelle 180 gerade so anzusteuern, dass die magnetorheologische Flüssigkeit bei Annäherung an eine kritische Drehzahl der Lageranordnung 120 einem Magnetfeld einer solchen Stärke ausgesetzt wird, dass durch das Ändern der Stärke des Magnetfelds die Lageranordnung 120 von einem überkritischen zu einem unterkritischen Betriebszustand oder von einem unterkritischen zu einem überkritischen Betriebszustand wechselt. Durch das Ändern der Stärke des Magnetfelds kann so ggf. sogar ohne das weiteres Zutun oder Ändern von Parametern der Betriebszustand der Lageranordnung 120 über den kritischen Bereich hinweg verändert werden. Optional kann darüber hinaus eine Lageranordnung 120 gemäß einem Ausführungsbeispiel wenigstens einen Sensor umfassen, der gerade in der Lage ist, wenigstens teilweise einen momentanen Betriebszustand der Lageranordnung 120 zu erfassen. Dieser kann mit dem Steuergerät gekoppelt sein, sodass das Steuergerät wenigstens teilweise auf Basis der von dem Sensor erfassten momentanen Betriebsbedingung die Magnetfeldquelle 180 gerade so ansteuern kann, um den Betriebszustand der Lageranordnung zu wechseln. Ein solcher Sensor kann beispielsweise ein Drehzahlsensor, jedoch auch ein Lagesensor sein, der beispielsweise eine Lage der Welle 110 bestimmt. Ebenso können auch Beschleunigungssensoren zum Einsatz kommen, die beispielsweise die auf die Welle 110 wirkenden Kräfte bzw. Beschleunigungen erfassen.

Das Steuergerät kann dann beispielsweise auf Basis einer geschlossenen Regelschleife, jedoch auch auf Basis einer Steuerung die Magnetfeldquelle 180 entsprechend so ansteuern, um in der vorbeschriebenen Art und Weise die Viskosität der magnetorheologischen Flüssigkeit anzupassen.

Der Einsatz von magnetorheologischen Flüssigkeiten als Dämpfungselement am laufradseitigen Gleit- oder Wälzlager in Ventilatorenanwendungen oder auch anderen Systemen kann es so ermöglichen, den Betriebspunkt ohne eine nennenswerte Beeinträchtigung von Schwingungen zu erreichen. Durch das Anlegen eines entsprechenden Magnetfeldes, welches auf die magnetorheologische Flüssigkeit einwirkt, kann so die Steifigkeit bzw. Viskosität der magnetorheologischen Flüssigkeit erheblich variiert werden. Hierdurch kann die Gesamtsteifigkeit des Systems bzw. der Lageranordnung 120 gezielt beeinflusst werden.

In den hier beschriebenen Ausführungsbeispielen wird einerseits durch eine aktive äußere Dämpfung des laufradseitigen Lagers 130 die Schwingungsamplitude des Systems gedämpft. Andererseits wird durch die Änderung des Magnetfelds innerhalb kürzester Zeit auch die Gesamtsteifigkeit des Systems verändert. Damit kann der kritische Frequenzbereich in ebenso kurzer Zeit verschoben werden. Wird also beispielsweise beim Beschleunigen der Welle eine Drehzahl erreicht, die in der Nähe einer kritischen Drehzahl des Systems bzw. der Anordnung liegt, kann durch ein entsprechendes Ansteuern der Magnetfeldquelle 180 die Viskosität der magnetorheologischen Flüssigkeit in dem Spalt 160 in sehr kurzer Zeit, beispielsweise in weniger als 10 ms, häufig sogar noch schneller, derart reduziert werden, dass bei im Wesentlichen unveränderter Drehzahl der Welle 110 die Eigenfrequenz des Gesamtsystems unter die Drehzahl der Welle 110 verlagert wird.

Anders ausgedrückt kann bei einem Start des Systems die Magnetfeldquelle 180 von dem in Fig. 2 nicht gezeigten Steuergerät gerade so angesteuert werden, dass die magnetorheologische Flüssigkeit in einem vergleichsweise hochviskosen Zustand vorliegt. Hierdurch wird dem System eine entsprechende Steifigkeit mit einer entsprechend hoch liegenden kritischen Frequenz bzw. Resonanzfrequenz verliehen. Wird diese erreicht bzw. ein entsprechender Bereich um diese herum, kann das Steuergerät die Magnetfeldquelle 180 so ansteuern, dass die Eigenfrequenz deutlich unter die momentan herrschende Drehzahl fällt.

Der Regel- oder Steueralgorithmus kann so bei der Anfahrt der Anlage für eine hohe Gesamtsteifigkeit des Systems sorgen. Ein möglicher kritischer Resonanzbereich ist damit von den aktuell vorliegenden Drehzahlen typischerweise meist entfernt. Dieses System liegt in einem Zustand hoher Steifigkeit, also in einem harten Zustand vor.

Bei Annäherung an diesen Resonanzbereich wird dann das System durch den Regelalgorithmus des Steuergeräts quasi instantan auf weich geschaltet und somit der kritische Frequenzbereich auf Drehzahlen weit unterhalb der aktuellen Drehzahl gelegt. Die schnelle Variation der Viskosität oder Steifigkeit der magnetorheologischen Flüssigkeit ermöglicht damit einen überkritischen Betriebspunkt zu erreichen, der ohne ein "wirkliches" Durchfahren eines Resonanzspektrums erreichbar ist. Das zur Beeinflussung der Steifigkeit oder Viskosität notwendige Magnetfeld kann über einen Regelkreis, der beispielsweise entsprechende Sensoren oder eine entsprechende Sensorik, ein Steuergerät (engl.: Controller) und eine entsprechende Magnetfeldquelle 180 umfasst, angesteuert werden. Auch eine Nachregelung bei einer Veränderung des Systems, wie es beispielsweise durch Anbackungen am Lüfterrad oder den Austausch von einem Lager verursacht werden kann, kann hiermit ermöglicht werden. Hierdurch kann trotz entsprechend bedingter minimaler Veränderungen der Lagerfedersteifigkeiten häufig ein störungsfreier Betrieb gewährleistet werden. Selbstverständlich kann auch ein vereinfachter Aufbau im Rahmen eines Ausführungsbeispiels implementiert werden, bei dem mittels eines Steuerkreises in Abhängigkeit von beispielsweise der Systemdrehzahl eine entsprechende Ansteuerung der magnetorheologischen Flüssigkeit in dem Spalt 160 durchgeführt wird.

Darüber hinaus kann die Magnetfeldquelle 180 ebenso einen oder mehrere Permanentmagneten und/oder einen Quasipermanentmagneten umfassen. Hierdurch kann es möglich sein, Notlaufeigenschaften auch bei einem etwaigen plötzlichen Stromausfall zu erhalten, bei dem das beispielsweise mittels Spulen erzeugte Magnetfeld durch Permanentmagneten ergänzt wird.

Ebenso kann ein semiaktives System implementiert werden, bei dem die Viskosität der magnetorheologischen Flüssigkeit durch einen Quasipermanentmagneten mit hoher Remanenz bestimmt wird. Hierdurch kann möglicherweise über längere Zeit eine permanente Stromversorgung einer solchen Lageranordnung 120 vermieden werden. Ein Quasipermanentmagnet kann beispielsweise auf Basis supraleitender Systeme implementiert werden.

Das in den Fig. 1 und 2 gezeigte Ausführungsbeispiel basiert zwar auf einem Zylinderrollenlager 300 als Lager 130, kann jedoch auch mithilfe anderer Lager implementiert werden, wie dies bereits zuvor kurz erläutert wurde. Die Aufnahme bildet zusammen mit der Buchse 170 bzw. dem Außenring 220 ein ringförmiges Bauteil, welches die magnetorheologische Flüssigkeit umfasst. Der Spalt 160 dient der Dämpfung der Bewegungen senkrecht zu der Achse 140 und wird daher auch als Dämpfungsspalt bezeichnet.

Neben der Magnetfeldquelle 180 kann eine Lageranordnung 120 ergänzend oder alternativ zu dieser Magnetfeldquelle 180 eine oder mehrere weitere Magnetfeldquellen 180` umfassen, die beispielsweise entlang der axialen Richtung, also entlang der Achse 140 auf der gleichen Höhe wie der Spalt 160 angeordnet sind und in Fig. 2 als punktierte Strukturen eingezeichnet sind. Die Magnetfeldquellen 180 können hierbei also linksbündig und rechtsbündig zu dem Spalt 160 angeordnet sein und beispielsweise die bereits zuvor erwähnten Permanentmagneten bzw. Quasipermanentmagneten, jedoch auch andere Magnetfeldquellen, also beispielsweise Spulen, Leiterbahnen oder Leiterschleifen umfassen.

Durch den Einsatz einer Lageranordnung 120 gemäß einem Ausführungsbeispiel kann so also eine dämpfende Lagerung implementiert werden, mit deren Hilfe der Resonanzbereich aktiv verstellt werden kann. Die Änderung der Steifigkeit bzw. Viskosität der magnetorheologischen Flüssigkeit in dem Spalt 160 erfolgt typischerweise hierbei sehr schnell, sodass die Schwingungsamplitude bei der Resonanzdurchfahrt kaum bzw. nur sehr kurz erhöht wird. Hierdurch kann es ggf. möglich sein, eine besser angepasste Auslegung des Ventilators bzw. seiner Lagerung zu ermöglichen, da keine hohen Steifigkeiten durch andere konstruktive Maßnahmen umgesetzt werden müssen. Hierdurch kann ggf. eine Erhöhung der Lagerlebensdauer erzielbar sein, da keine frühzeitigen Ausfälle durch Minderlastprobleme zu erwarten sind. Ebenso kann es hierdurch ggf. möglich sein, eine geringere Reibung und geringere Lagertemperaturen zu erzielen.

Darüber hinaus können beispielsweise bei einer Revision keine so engen Toleranzen hinsichtlich der verwendeten Lager 130 oder auch andere spezielle Ausführungen erforderlich sein, da aufgrund der Steuerbarkeit der Viskosität gewisse Parameterfluktuationen kompensierbar sein können. Ebenso kann es ggf. möglich sein, beispielsweise einen Ventilator 100 gemäß einem Ausführungsbeispiel mit höheren Unwuchten zu betreiben. Ebenso kann ggf. eine Anforderung hinsichtlich des Aufstellungsorts des Ventilators bzw. der Lageranordnung 120 entfallen bzw. reduziert werden.

Durch den Einsatz einer Lageranordnung 120 können ggf. auch höhere Drehzahlbereiche realisiert werden, ohne die Gefahr eingehen zu müssen, dass Resonanzerscheinungen in signifikantem Maße zu erwarten sind. Ebenso kann ggf. eine permanente externe Ölversorgung sowie der Einsatz von Hydraulikaggregaten eingespart werden. Auch kann ggf. eine Betriebsoptimierung dadurch erfolgen, dass die Steifigkeit der magnetorheologischen Flüssigkeit in Abhängigkeit der Drehzahl und/oder auftretender Schwingungen kompensierbar ist, indem die Viskosität der magnetorheologischen Flüssigkeit geregelt wird.

Auch kann ggf. ein vereinfachter Aufbau dadurch eine leichtere Übertragung auf andere Anwendungen ermöglichen, bei denen eine Schwingungsdämpfung ratsam oder notwendig ist. So sind Ausführungsbeispiele einer Lageranordnung 120 bei Weitem nicht auf die zuvor beschriebenen Ventilatoren 100 beschränkt, auch wenn in der vorliegenden Beschreibung der Fokus auf der Dämpfung eines mit magnetorheologischen Flüssigkeiten eines fliegend gelagerten Ventilators 100 gelegen haben.

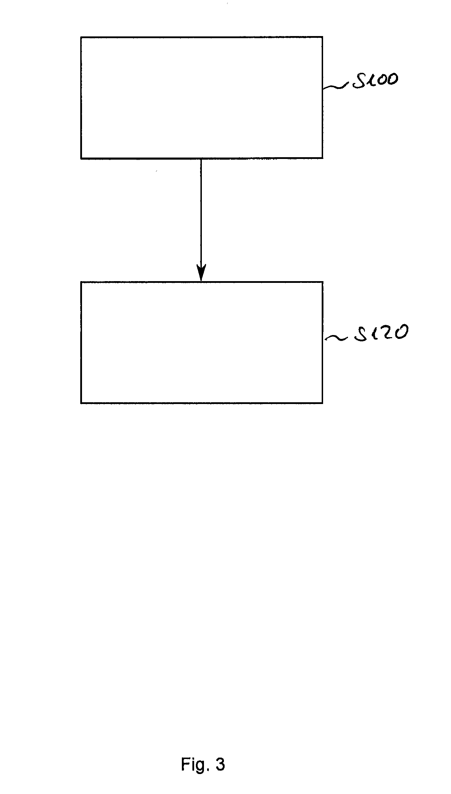

Fig. 3 zeigt schließlich ein Flussdiagramm eines Verfahrens gemäß einem Ausführungsbeispiel zum Führen einer Welle 100 mithilfe einer Lageranordnung 120 wie diese zuvor beschrieben wurde. Zunächst wird im Rahmen eines Schritts S100 der Betriebszustand der Lageranordnung 120 erfasst. Anschließend wird im Rahmen eines Schritts S120 die Stärke des Magnetfelds geändert, dem die magnetorheologische Flüssigkeit ausgesetzt ist, sodass diese bei Annäherung an die kritische Drehzahl der Lageranordnung 120 einem Magnetfeld einer solchen Stärke ausgesetzt wird, dass durch das Ändern der Stärke des Magnetfelds die Lageranordnung 120 von einem überkritischen zu einem unterkritischen Betriebszustand oder von einem unterkritischen zu einem überkritischen Betriebszustand wechselt.

Ein Ausführungsbeispiel kann so eine Dämpfung eines fliegend gelagerten Ventilators 100 mittels einer magnetorheologischen Flüssigkeit ermöglichen. Hierdurch kann ggf. eine Betriebssicherheit einer eine Lageranordnung 120 umfassende Anlage, Maschine oder Baugruppe erhöht werden.

Bei einem Ausführungsbeispiel eines Verfahrens können die zuvor genannten Verfahrensschritte in der angegebenen, jedoch auch gegebenenfalls in einer abweichenden Reihenfolge durchgeführt werden. So können gegebenenfalls einzelne Verfahrensschritte simultan, zumindest jedoch auch zeitlich überlappend erfolgen, sofern sich aus deren Beschreibung oder dem technischen Zusammenhang nichts anderes ergibt.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern und so beispielsweise mittels Aktoren auch komplexere Verfahrensschritte durchführen.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichenliste

- 100: Ventilator
- 110: Welle
- 120: Lageranordnung
- 130: Lager
- 140: Achse
- 150: Aufnahme
- 160: Spalt
- 170: Buchse
- 180: Magnetfeldquelle
- 190: Innenring
- 200: Wellenansatz
- 210: Muffe
- 220: Außenring
- 230: Sicherungsring
- 240: Vorsprung
- 250: Gehäuse
- 260: Absatz
- 270: Distanzstück
- 280: Gehäusedeckel
- 290: Verschraubung
- 300: Zylinderrollenlager
- 310: Zylinderförmiger Wälzkörper
- 320: Nut
- 330: Dichtelement
- 340: O-Ring
- 350: Nut
- S100: Erfassen eines Betriebszustands
- S120: Ändern einer Stärke des Magnetfelds

## Patentansprüche

1. Lageranordnung (120), beispielsweise für einen Ventilator (100), mit folgenden Merkmalen:
einem Lager (130), das ausgebildet ist, um eine Welle (110) wenigstens radial zu führen;
einer Aufnahme (150) für das Lager (130), die so ausgebildet ist, dass zwischen dem Lager (130) und der Aufnahme (120) ein ringförmiger, das Lager (130) umgebender Spalt (160) gebildet wird, sodass das Lager (130) eine Bewegung senkrecht zu einer Achse (140) des Lagers (130) ausführen kann, wobei der Spalt (160) eine magnetorheologische Flüssigkeit umfasst;
einer Magnetfeldquelle (180), die ausgebildet ist, um die magnetorheologische Flüssigkeit einem Magnetfeld mit einer einstellbaren oder regelbaren Stärke auszusetzen; und
einem Steuergerät, das ausgebildet ist, um die Magnetfeldquelle (180) derart anzusteuern, dass die magnetorheologische Flüssigkeit bei Annäherung an eine kritische Drehzahl der Lageranordnung (120) einem Magnetfeld einer solchen Stärke ausgesetzt wird, dass durch das Ändern der Stärke des Magnetfelds die Lageranordnung (120) von einem überkritischen zu einem unterkritischen Betriebszustand oder von einem unterkritischen zu einem überkritischen Betriebszustand wechselt.

2. Lageranordnung (120) nach Anspruch 1, die ferner wenigstens ein Dichtelement (330), beispielsweise wenigstens einen O-Ring (340), umfasst, das ausgebildet ist, um den Spalt (160) abzudichten und eine Federwirkung senkrecht zu der Achse (140) des Lagers (130) auf das Lager (130) auszuüben.

3. Lageranordnung (120) nach einem der vorhergehenden Ansprüche, das ferner wenigstens einen Sensor zum wenigstens teilweise Erfassen eines momentanen Betriebszustands der Lageranordnung (120) umfasst, der mit dem Steuergerät gekoppelt ist, wobei das Steuergerät ausgebildet ist, um wenigstens teilweise auf Basis des von dem Sensor erfassten momentanen Betriebszustands die Magnetfeldquelle (180) anzusteuern, um den Betriebszustand der Lageranordnung (120) zu wechseln.

4. Lageranordnung (120) nach einem der vorhergehenden Ansprüche, bei der das Steuergerät ausgebildet ist, um auf Basis einer geschlossenen Regelschleife die Magnetfeldquelle (180) anzusteuern, um den Wechsel des Betriebszustands zu bewirken, oder bei dem das Steuergerät ausgebildet ist, um auf Basis einer Ansteuerung, beispielsweise auf Basis einer Drehzahl der Welle (110), die Magnetfeldquelle (180) anzusteuern, um den Wechsel des Betriebszustands zu bewirken.

5. Lageranordnung (120) nach einem der vorhergehenden Ansprüche, bei der die Magnetfeldquelle (180) einen Permanentmagneten und/oder einen Quasipermanentmagneten umfasst.

6. Ventilator (100) mit einem Laufrad, das fliegend an einer Welle (110) angeordnet ist, wobei die Welle (110) durch eine Lageranordnung (120) nach einem der vorhergehenden Ansprüche geführt ist.

7. Verfahren zum Führen einer Welle (110), beispielsweise eines Ventilators (100), wenigstens mittels einer Lageranordnung (120), die ein Lager (130), das ausgebildet ist, um eine Welle (110) wenigstens radial zu führen, und eine Aufnahme (120) für das Lager (130) umfasst, die so ausgebildet ist, dass zwischen dem Lager (130) und der Aufnahme (120) ein ringförmiger, das Lager (130) umgebender Spalt (160) gebildet wird, sodass das Lager (130) eine Bewegung senkrecht zu einer Achse (140) des Lagers (130) ausführen kann, wobei der Spalt (160) eine magnetorheologische Flüssigkeit umfasst, wobei die Lageranordnung (120) so ausgebildet ist, dass bei einer nominellen Drehzahl die Lageranordnung (120) in einem überkritischen Betriebszustand betreibbar ist, umfassend:
Erfassen (S100) eines Betriebszustands der Lageranordnung (120); und
Ändern (S120) einer Stärke eines Magnetfeldes, dem die magnetorheologische Flüssigkeit ausgesetzt ist, sodass die magnetorheologische Flüssigkeit bei Annäherung an eine kritische Drehzahl der Lageranordnung (120) einem Magnetfeld einer solchen Stärke ausgesetzt wird, dass durch das Ändern der Stärke des Magnetfelds die Lageranordnung (120) von einem überkritischen zu einem unterkritischen Betriebszustand oder von einem unterkritischen zu einem überkritischen Betriebszustand wechselt.

8. Programm mit einem Programmcode zum Durchführen des Verfahrens nach Anspruch 7, wenn das Programm auf einer programmierbaren Hardwarekomponente abläuft.
